# EUROPEAN PATENT SPECIFICATION

(11) **EP 2 972 791 B1**
(45) Date of publication and mention of the grant of the patent: **07.08.2019**
(21) Application number: 14724200.2
(22) Date of filing: 14.03.2014
(51) Int. Cl.: G06F 9/30, G06F 9/38

(54) **METHOD AND APPARATUS FOR FORWARDING LITERAL GENERATED DATA TO DEPENDENT INSTRUCTIONS MORE EFFICIENTLY USING A CONSTANT CACHE**
VERFAHREN UND VORRICHTUNG ZUM WEITERLEITEN SCHRIFTLICH ERZEUGTER DATEN FÜR ANWEISUNGEN ZUR EFFIZIENTEREN VERWENDUNG EINES KONSTANTEN CACHE-SPEICHERS
PROCÉDÉ ET APPAREIL POUR TRANSFÉRER DES DONNÉES GÉNÉRÉES LITTÉRALES À DES INSTRUCTIONS DÉPENDANTES PLUS EFFICACEMENT À L'AIDE D'UN CACHE DE CONSTANTE

(30) Priority: 14.03.2013 US 201313827867
(43) Date of publication of application: 20.01.2016
(73) Proprietor: Qualcomm Incorporated, San Diego, CA 92121 (US)
(72) Inventor: DIEFFENDERFER, James Norris, San Diego, California 92121 (US); MORROW, Michael William, San Diego, California 92121 (US); SMITH, Rodney Wayne, San Diego, California 92121 (US); SCHOTTMILLER, Jeffery M., San Diego, California 92121 (US); HIGDON, Daniel S., San Diego, California 92121 (US); MCILVAINE, Michael Scott, San Diego, California 92121 (US); STEMPEL, Brian Michael, San Diego, California 92121 (US); KOTHARI, Kulin Narendra, San Diego, California 92121 (US)
(74) Representative: Tomkins & Co
(86) International application number: PCT/US2014/026907
(87) International publication number: WO 2014/152064

(56) References cited:
- WO-A2-2007/027671
- US-A1- 2010 106 944
- US-B1- 6 505 293

## Description

### Field of Disclosure

The invention relates to microprocessors.

### Background

In a typical central processing unit (CPU) pipeline flow, an instruction in the pipeline will first obtain its operands and then execute before finally writing back the result and possibly forwarding the result to subsequent dependent consuming instructions. Depending on the CPU microarchitecture, this process often occurs across multiple pipeline stages so as to optimize performance and frequency.

In a superscalar processor containing multiple execution pipelines, forwarding the result of one instruction to one or more consuming instructions in the pipelines may be a performance critical function that if not done efficiently may lead to pipeline stalls. A data dependency stall is the most common stall involving instructions attempting to dispatch to their respective pipelines for execution, where a stalled instruction waits for the producer of an operand to complete. Delays in forwarding the needed operand from its producer to the stalled instruction results in degraded CPU performance. US 6505293 discloses a value-matching cache storing constant values associated with physical registers storing those values.

### SUMMARY

Embodiments of the invention are directed to systems and methods for forwarding literal generated data to dependent instructions more efficiently using a cache for storing constants (literals or immediates).

In an embodiment, a processor includes a register, a first pipeline, a cache, and a controller. The controller stores a value in an entry in the cache in response to the first pipeline decoding an instruction, wherein the instruction writes the value to the register upon completing execution, and wherein the value is determined or available when the first pipeline decodes the instruction. The controller sets a tag field in the entry to tag the entry with the register, and sets a flag field in the entry to indicate that the entry is valid. The instruction may be a move immediate instruction.

In another embodiment, a method includes decoding a first instruction in a first pipeline, wherein the first instruction writes a value to a register upon completing execution, and wherein the value is determined or available when the first pipeline decodes the first instruction. The method further includes storing the value in an entry in a cache; tagging the entry with the register; and setting the entry as valid.

In another embodiment, a processor includes a first pipeline to decode a first instruction, wherein the first instruction writes a value to a register upon completing execution, and wherein the value is determined or available when the first pipeline decodes the first instruction. The processor further includes a means for storing, the means for storing to store the value in an entry in a cache; a means for tagging, the means for tagging to tag the entry with the register; and a means for setting, the means for setting to set the entry as valid.

In another embodiment, a non-transitory computer readable medium has stored instructions to cause a processor to perform a process. The process includes decoding a first instruction in a first pipeline, wherein the first instruction writes a value to a register upon completing execution, and wherein the value is determined or available when the first pipeline decodes the first instruction; storing the value in an entry in a cache; tagging the entry with the register; and setting the entry as valid.

### BRIEF DESCRIPTION OF THE DRAWINGS

The accompanying drawings are presented to aid in the description of embodiments of the invention and are provided solely for illustration of the embodiments and not limitation thereof.
Figure 1 illustrates a processor according to an embodiment.
Figure 2 illustrates a method according to an embodiment.
Figure 3 illustrates a wireless communication system in which embodiments may find application.

### DETAILED DESCRIPTION

Aspects of the invention are disclosed in the following description and related drawings directed to specific embodiments of the invention. Alternate embodiments may be devised without departing from the scope of the invention. Additionally, well-known elements of the invention will not be described in detail or will be omitted so as not to obscure the relevant details of the invention.

The word "exemplary" is used herein to mean "serving as an example, instance, or illustration." Any embodiment described herein as "exemplary" is not necessarily to be construed as preferred or advantageous over other embodiments. Likewise, the term "embodiments of the invention" does not require that all embodiments of the invention include the discussed feature, advantage or mode of operation.

The terminology used herein is for the purpose of describing particular embodiments only and is not intended to be limiting of embodiments of the invention. As used herein, the singular forms "a", "an" and "the" are intended to include the plural forms as well, unless the context clearly indicates otherwise. It will be further understood that the terms "comprises", "comprising", "includes" and/or "including", when used herein, specify the presence of stated features, integers, steps, operations, elements, and/or components, but do not preclude the presence or addition of one or more other features, integers, steps, operations, elements, components, and/or groups thereof.

Further, many embodiments are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the invention may be embodied in a number of different forms, all of which have been contemplated to be within the scope of the claimed subject matter. In addition, for each of the embodiments described herein, the corresponding form of any such embodiments may be described herein as, for example, "logic configured to" perform the described action.

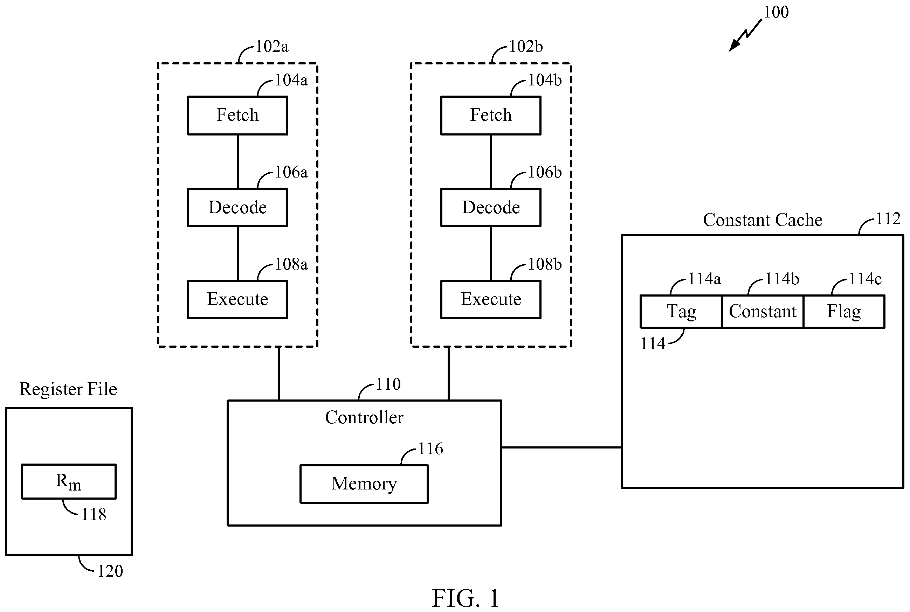

Figure 1 illustrates components of a processor 100, where for ease of illustration not all components are illustrated. Many processors are superscalar processor, employing more than one pipeline. Two pipelines are illustrated in Figure 1, labeled 102a and 102b, although in practice there may be more than two pipelines in a superscalar processor. For simplicity, three stages are shown in each pipeline, but in practice more than three stages are likely used.

Illustrated in the pipelines of Figure 1 are instruction fetch stages 104a and 104b, decode stages 106a and 106b, and execution stages 108a and 108b. A pipeline may include other stages such as register fetch, hazard checking, cache hit detection, data fetch, and write back for loads and register-to-register operations, to name a few examples. A controller functional unit, labeled 110, controls the pipelines 102a and 102b.

A move instruction is a commonly used instruction for moving (copying or writing) data from one location to another. A move instruction is often written as MOV, and that convention will be followed here. A common use of a move instruction is to copy the value of a constant into an architected register. The constant value to be copied may be referred to as an immediate or literal. A move instruction for moving a constant to a register may be termed a move immediate instruction and written as MOV *Rm #constant,* where *constant* refers to the constant value and *Rm* refers to the architected register to which the constant value is written. In Figure 1, the register *Rm* is labeled 118 and is illustrated as a register within the register file 120.

Upon decoding a move immediate instruction, an embodiment stores the constant as part of an entry in a cache, referred to as a constant cache and labeled 112 in Figure 1. An entry in the constant cache 112 is labeled 114 in Figure 1, and comprises three fields: a tag field labeled 114a, a constant field labeled 114b, and a flag field labeled 114c. As its name implies, the constant field 114b stores the constant value associated with the entry. The tag field 114a identifies the register to which the constant value is to be written (or moved). The flag field 114c comprises one or more bits to indicate the status of the entry 114. For some embodiment, the flag field 114c may be one bit in width, indicating whether the entry is valid or not.

The constant cache 112 may be realized in the processor 100 as a register file. In the illustration of Figure 1, the constant cache 112 is shown as a separate structure from the register file 120. However, the constant cache 112 need not necessarily be independent of the register file 120. For example, the constant cache 112 may be part of the register file 120, or both structures may be included in a larger register file structure.

A move immediate instruction requires no subsequent execution to calculate its result. Typically, when a constant is generated, it is consumed immediately by a subsequent (in program order) consuming instruction. By utilizing the constant cache 112, subsequent consuming instructions have access to the stored constant value before the constant value is written to the destination architected register.

The contents of the constant cache 112 may be viewed as being organized into a table, where the constant value stored in an entry is written by a move immediate instruction and tagged according to the destination register of the move immediate instruction. Consider a result (the constant value) of a move immediate instruction stored in the constant cache 112 and a subsequent (in program order) instruction that depends upon the move immediate instruction, where an operand of the subsequent instruction is the constant value that the move immediate instruction is to move to a destination register. The subsequent instruction is the consuming instruction, and the destination register is the register targeted by the move instruction.

For an embodiment, execution of the consuming instruction need not wait for the result of the move immediate instruction to be forwarded, nor wait for the move immediate instruction to complete execution. Rather, the consuming instruction may use as its operand the constant value stored in the entry in the constant cache 112 associated with the move immediate instruction that it depends upon. As a result, no data forwarding is required and no data stall need occur regardless of whether the move immediate instruction has completed or is still in a pipeline.

Furthermore, the move immediate instruction and the data dependent consuming instruction may be at the same stage in different pipelines, and yet for some embodiments the data dependent consuming instruction may obtain its operand with zero pipeline cycle delay.

When a move immediate instruction is decoded and its immediate (literal or constant value) is stored in an entry in the constant cache 114, the flag field 114c associated with the entry is set to indicate that the contents of the entry are valid. When that entry is later accessed by a consuming instruction, the validity of an entry is checked before the immediate stored in the entry is forwarded to the consuming instruction. If the flag field associated with an entry indicates that the immediate stored in the entry is not valid, then the stored immediate is not forwarded to the consuming instruction.

Although the above description is within the context of a move immediate instruction, embodiments are not limited to move immediate instructions when employing the constant cache 112. The controller 110 may be configured so that for other types of instructions that write values to a destination register, an entry may be generated in the constant cache 112 as described with respect to the move immediate instruction, so that the stored value may be forwarded to a consuming instruction. Examples of such instructions are branch and link instructions, and program control relative branches, to name a few.

More generally, the described embodiments may be apply to instructions that write a result to the register file, where the result can be determined by either information contained in the decode of the instruction or available at the time of decode. Such instructions do not have any operands that must read the register file. However, for ease of discussion, the embodiments disclosed herein are described for a move immediate instruction, where a move immediate instruction merely serves as example instruction for which embodiments may be of utility.

When an instruction writes a result to an architected register, where the instruction needs to read from the register file before execution to determine the result, then the controller 110 invalidates any entry in the constant cache 114 with a tag matching the architected register. In this case, the controller 110 sets the flag field of the matching entry to a value indicating that the constant value stored in the entry is not valid.

Controller 110 updates entries in the constant cache 114 according to the above-described embodiments. These actions are may be performed completely by hardware. For some embodiments, instructions stored in a memory, such as for example the memory 116, may carry out the above-described actions. The memory 116 may in general be a non-transitory computer readable medium.

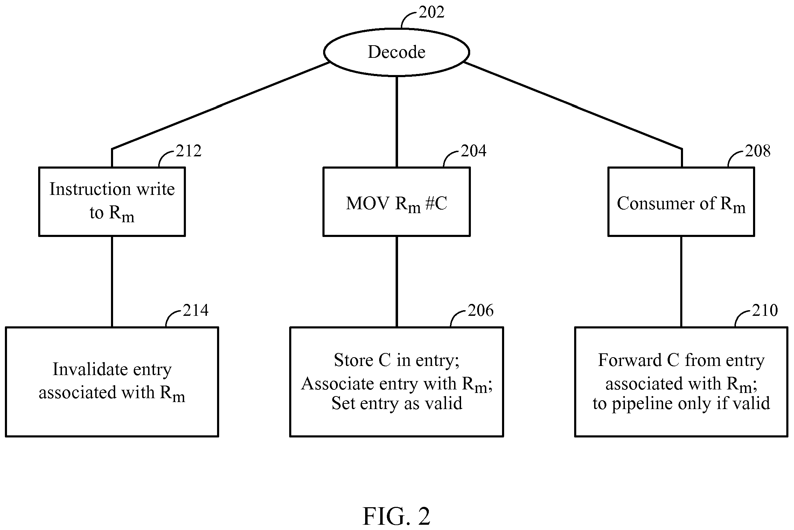

Figure 2 illustrates the above-described actions. In step 202 an instruction is decoded. In step 204 the decoded instructions is a move immediate instruction, denoted as MOV Rₘ #C to indicate that a constant value C is to be moved into architected register Rₘ. Upon decoding the move immediate instruction, step 206 indicates that the constant value C is stored in an entry in the constant cache 112, where the entry is tagged with the register Rₘ, and the flag field of the entry is set to indicate that the entry is valid.

If the decoded instruction is a consumer of the architected register Rₘ, as indicated in step 208, then provided there is a valid entry in the constant cache 112 associated (tagged) with the architected register Rₘ, the constant value C stored in the constant field of that entry is forwarded to the consumer, as indicated in step 210. If the decoded instruction is an instruction that completes execution and writes (or copies) a constant value to the architected register Rₘ, as indicated in step 212, then the controller 110 invalidates the entry (provided there is one) in the constant cache 112 associated (tagged) with the architected register Rₘ, as indicated in step 214.

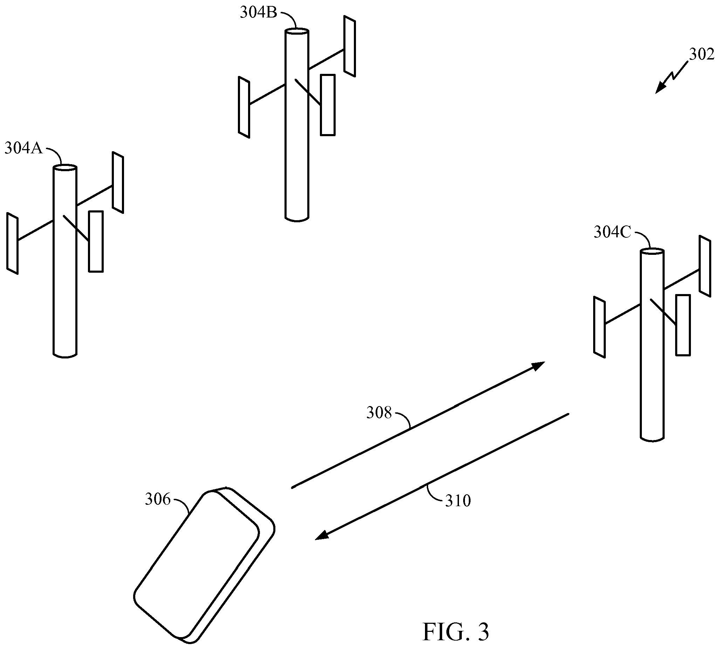

Figure 3 illustrates a wireless communication system in which embodiments may find application. Figure 3 illustrates a communication network 302 comprising base stations 304A, 304B, and 304C. Figure 3 shows a communication device, labeled 306, which may be a mobile cellular communication device such as a cellular phone (e.g., a smart phone), a tablet, or other kind of communication device suitable for a cellular phone network, such as a computer system. The communication device 306 need not be mobile. In the particular example of Figure 3, the communication device 306 is located within the cell associated with the base station 304C. Arrows 308 and 310 pictorially represent the uplink channel and the downlink channel, respectively, by which the communication device 306 communicates with the base station 304C.

Embodiments may be used in data processing systems associated with the communication device 306, or with the base station 304C, or both, for example. Figure 3 illustrates only one application among many in which the embodiments described herein may be employed.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The methods, sequences and/or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

Accordingly, an embodiment of the invention can include a computer readable media embodying a method for forwarding literal generated data to dependent instructions more efficiently using a constant cache.

Accordingly, the invention is not limited to illustrated examples and any means for performing the functionality described herein are included in embodiments of the invention.

While the foregoing disclosure shows illustrative embodiments of the invention, it should be noted that various changes and modifications could be made herein without departing from the scope of the invention as defined by the appended claims. The functions, steps and/or actions of the method claims in accordance with the embodiments of the invention described herein need not be performed in any particular order. Furthermore, although elements of the invention may be described or claimed in the singular, the plural is contemplated unless limitation to the singular is explicitly stated.

## Claims

1. An apparatus (100) comprising:
a register (118);
a first pipeline (102a) to decode a first instruction, wherein the first instruction writes a value to the register upon completing execution, and wherein the value is determined or available when the first pipeline decodes the first instruction without reading a register file;
a means for storing (110), the means for storing to store entries (114) in a cache (112) and to store the value in an entry in the cache upon decoding the first instruction;
a means for tagging (110), the means for tagging to tag each entry in the cache and to search the cache based upon the tags, and to tag the entry with the register; and
a means for setting (110), the means for setting to set the entry as valid.

2. The apparatus of claim 1, comprising:
a cache (112) to store the entries, each entry having a tag field (114a), where entries are searched according to the tag field; and
a controller (110) to store the value in the entry in the cache in response to the first pipeline decoding an instruction;
the controller to set the tag field in the entry indicative of the register, and to set a flag field (114c) in the entry to indicate the entry is valid.

3. The apparatus of claim 1 or claim 2, wherein the instruction is a move immediate instruction.

4. The apparatus of claim 2, the controller, in response to the first pipeline decoding a consuming instruction subsequent in program order to the instruction and having an operand naming the register, to
search the cache for the entry tagged with the register; and
forward the value to the first pipeline provided the entry is found and provided the flag field of the entry indicates the entry is valid.

5. The apparatus of claim 1, further comprising:
a means for forwarding (110), the means for forwarding to forward the value from the entry to the first pipeline as an operand for a second instruction decoded in the first pipeline, provided the entry is indicated valid, the second instruction subsequent in program order to the first instruction and a consuming instruction of the value.

6. The apparatus of claim 5, further comprising a register file (120), the register file comprising the register, wherein the means for setting sets the entry as invalid upon the first pipeline decoding a third instruction targeting the register, the third instruction determining its result by reading from the register file.

7. The apparatus of claim 1, further comprising a register file (120), the register file comprising the register, wherein the means for setting sets the entry as invalid upon the first pipeline decoding a second instruction targeting the register, the second instruction determining its result by reading from the register file.

8. The apparatus of claim 1, further comprising:
a second pipeline (102b); and
a means for forwarding (110), the means for forwarding to forward the value from the entry to the second pipeline as an operand for a second instruction decoded in the second pipeline, the second instruction subsequent in program order to the first instruction and a consuming instruction of the value, provided the entry is indicated valid.

9. The apparatus of claim 8, further comprising a register file (120), the register file comprising the register, wherein the means for setting sets the entry as invalid upon the first pipeline decoding a third instruction, the third instruction targeting the register, the third instruction determining its result by reading from the register file.

10. The apparatus of claim 1, further comprising:
a second pipeline (102b); and
a means for forwarding (110), the means for forwarding to forward the value to the second pipeline as an operand for a second instruction decoded in the second pipeline with zero pipeline cycle delay, the second instruction subsequent in program order to the first instruction and a consuming instruction of the value, provided the first instruction causes the entry to be indicated valid when the first instruction executes.

11. The apparatus of claim 1 or claim 2, wherein the apparatus is selected from the group consisting of a cellular phone and a base station.

12. A method comprising:
decoding (202) a first instruction in a first pipeline, wherein the first instruction writes a value to a register upon completing execution, and wherein the value is determined or available when the first pipeline decodes the first instruction without reading a register file;
storing (206) the value in an entry in a cache upon decoding the first instruction;
tagging (206) the entry with the register, wherein the cache is searched according to the tagging; and
setting (206) the entry as valid.

13. The method of claim 12, wherein the first instruction is a move immediate instruction.

14. The method of claim 12, further comprising:
decoding (202) a second instruction in the first pipeline, the second instruction subsequent in program order to the first instruction and a consuming instruction of the value; and
forwarding (210) the value from the entry in the cache to the first pipeline as an operand for the second instruction, provided the entry is indicated valid.

15. A non-transitory computer-readable medium having stored instructions to cause an apparatus according to claim 1 to perform a method according to any of claims 12 to 14.

## Patentansprüche

1. Eine Vorrichtung (100), die Folgendes aufweist:
ein Register (118);
eine erste Pipeline (102a) zum Decodieren eines ersten Befehls, wobei der erste Befehl einen Wert in das Register schreibt auf Abschließen einer Ausführung hin, und wobei der Wert bestimmt wird oder verfügbar ist, wenn die erste Pipeline den ersten Befehl ohne Lesen einer Registerdatei decodiert;
Mittel zum Speichern (110), wobei die Mittel zum Speichern vorgesehen sind zum Speichern von Einträgen (114) in einem Cache (112) und zum Speichern des Wertes in einem Eintrag in dem Cache auf Decodieren des ersten Befehls hin;
Mittel zum Markieren bzw. Taggen (110), wobei die Mittel zum Taggen vorgesehen sind zum Taggen jedes Eintrags in dem Cache und zum Durchsuchen des Cache basierend auf den Markierungen bzw. Tags, und zum Taggen des Eintrags mit dem Register; und
Mittel zum Setzen (110), wobei die Mittel zum Setzen vorgesehen sind zum Setzen des Eintrags als gültig.

2. Vorrichtung nach Anspruch 1, die Folgendes aufweist:
einen Cache (112) zum Speichern der Einträge, wobei jeder Eintrag ein Tag-Feld (114a) hat, wobei Einträge gemäß dem Tag-Feld durchsucht werden; und
eine Steuervorrichtung bzw. einen Controller (110) zum Speichern des Wertes in dem Eintrag in dem Cache ansprechend darauf, dass die erste Pipeline einen Befehl decodiert;
wobei der Controller vorgesehen ist zum Setzen des Tag-Feldes in dem Eintrag, so dass es das Register anzeigt, und zum Setzen eines Flag-Feldes (114c) in dem Eintrag, so dass es anzeigt, dass der Eintrag gültig ist.

3. Vorrichtung nach Anspruch 1 oder Anspruch 2, wobei der Befehl ein Move-Immediate-Befehl ist.

4. Vorrichtung nach Anspruch 2, wobei der Controller, ansprechend darauf, dass die erste Pipeline einen Consuming- bzw. Konsumier-Befehl nachfolgend in der Programmreihenfolge auf den Befehl decodiert und einem Operanden hat, der das Register benennt, vorgesehen ist zum Durchsuchen des Cache hinsichtlich des Eintrags, der mit dem Register getagged ist; und
Weiterleiten des Wertes an die erste Pipeline, wenn der Eintrag gefunden wird und wenn das Flag-Feld des Eintrags anzeigt, dass der Eintrag gültig ist.

5. Vorrichtung nach Anspruch 1, die weiter Folgendes aufweist:
Mittel zum Weiterleiten (110), wobei die Mittel zum Weiterleiten vorgesehen sind zum Weiterleiten des Wertes aus dem Eintrag an die erste Pipeline als ein Operand für einen zweiten Befehl, der in der ersten Pipeline decodiert wird, wenn der Eintrag als gültig angezeigt wird, der zweite Befehl nachfolgend in der Programmreihenfolge auf den ersten Befehl ist und ein Konsumier-Befehl des Wertes ist.

6. Vorrichtung nach Anspruch 5, die weiter eine Registerdatei (120) aufweist, wobei die Registerdatei das Register aufweist, wobei die Mittel zum Setzen den Eintrag als ungültig setzen darauf hin, dass die erste Pipeline einen dritten Befehl decodiert, der auf das Register zielt, wobei der dritte Befehl sein Ergebnis durch Lesen aus der Registerdatei bestimmt.

7. Vorrichtung nach Anspruch 1, die weiter eine Registerdatei (120) aufweist, wobei die Registerdatei das Register aufweist, wobei die Mittel zum Setzen den Eintrag als ungültig setzen darauf hin, dass die erste Pipeline einen zweiten Befehl decodiert, der auf das Register zielt, wobei der zweite Befehl sein Ergebnis durch Lesen aus der Registerdatei bestimmt.

8. Vorrichtung nach Anspruch 1, die weiter Folgendes aufweist:
eine zweite Pipeline (102b); und
Mittel zum Weiterleiten (110), wobei die Mittel zum Weiterleiten den Wert von dem Eintrag an die zweite Pipeline als ein Operand für einen zweiten Befehl, der in der zweiten Pipeline decodiert wird, weiterleiten, wobei der zweite Befehl nachfolgend in der Programmreihenfolge zu dem ersten Befehl ist und ein Konsumier-Befehl des Wertes ist, wenn der Eintrag als gültig angezeigt wird.

9. Vorrichtung nach Anspruch 8, die weiter eine Registerdatei (120) aufweist, wobei die Registerdatei das Register aufweist, wobei die Mittel zum Setzen den Eintrag als ungültig setzen darauf hin, dass die erste Pipeline einen dritten Befehl decodiert, wobei der dritte Befehl auf das Register zielt, wobei der dritte Befehl sein Ergebnis durch Lesen aus Registerdatei bestimmt.

10. Vorrichtung nach Anspruch 1, die weiter Folgendes aufweist:
eine zweite Pipeline (102b); und
Mittel zum Weiterleiten (110), wobei die Mittel zum Weiterleiten den Wert an die zweite Pipeline als ein Operand für einen zweiten Befehl weiterleiten, der in der zweiten Pipeline mit null Pipeline-Zyklusverzögerung decodiert wird, wobei der zweite Befehl in der Programmreihenfolge nachfolgend auf den ersten Befehl ist und ein Konsumier-Befehl des Wertes ist, wenn der erste Befehl veranlasst, dass der Eintrag als gültig angezeigt wird, wenn der erste Befehl ausgeführt wird.

11. Vorrichtung nach Anspruch 1 oder Anspruch 2, wobei die Vorrichtung aus der Gruppe ausgewählt wird die aus einem zellulären Telefon bzw. Mobilfunktelefon und einer Basisstation besteht.

12. Ein Verfahren, das Folgendes aufweist:
Decodieren (202) eines ersten Befehls einer ersten Pipeline, wobei der erste Befehl einen Wert in ein Register auf Abschließen einer Ausführung hin schreibt, und wobei der Wert bestimmt wird oder verfügbar ist, wenn die erste Pipeline den ersten Befehl ohne Lesen einer Registerdatei decodiert;
Speichern (206) des Wertes in einem Eintrag in einem Cache auf Decodieren des ersten Befehls hin;
Markieren bzw. Taggen (206) des Eintrags mit dem Register, wenn der Cache gemäß dem Taggen bzw. dem Markieren durchsucht wird; und
Setzen (206) des Eintrags auf gültig.

13. Verfahren nach Anspruch 12, wobei der erste Befehl einen Move-Immediate-Befehl ist.

14. Verfahren nach Anspruch 12, das weiter Folgendes aufweist:
Decodieren (202) eines zweiten Befehls in der ersten Pipeline, wobei der zweite Befehl in einer Programmreihenfolge auf den ersten Befehl nachfolgt und ein Konsumier-Befehl des Wertes ist; und
Weiterleiten (210) des Wertes aus dem Eintrag in dem Cache an die erste Pipeline als ein Operand für den zweiten Befehl, wenn der Eintrag als gültig angezeigt wird.

15. Ein nicht transitorisches computerlesbares Medium mit gespeicherten Befehlen, um eine Vorrichtung nach Anspruch 1 zu veranlassen, ein Verfahren nach einem der Ansprüche 12 bis 14 durchzuführen.

## Revendications

1. Un appareil (100) comprenant :
un registre (118) ;
un premier pipeline (102a) pour décoder une première instruction, la première instruction écrivant une valeur dans le registre à la fin de l'exécution, et dans lequel la valeur est déterminée ou disponible lorsque le premier pipeline décode la première instruction sans lire un fichier de registre ;
un moyen pour stocker (110), le moyen pour stocker étant destiné à stocker des entrées (114) dans une mémoire cache (112) et à stocker la valeur dans une entrée de la mémoire cache lors du décodage de la première instruction ;
un moyen d'étiquetage (110), le moyen d'étiquetage permettant d'étiqueter chaque entrée de la mémoire cache et de rechercher dans la mémoire cache sur la base des étiquettes, et d'étiqueter l'entrée avec le registre ; et
un moyen de définition (110), le moyen de définition étant destiné à valider l'entrée.

2. L'appareil de la revendication 1, comprenant :
une mémoire cache (112) pour stocker les entrées, chaque entrée ayant un champ d'étiquette (114a), où les entrées sont recherchées en fonction du champ d'étiquette ; et
un contrôleur (110) pour stocker la valeur dans l'entrée de la mémoire cache en réponse au décodage par le premier pipeline d'une instruction ;
le contrôleur étant prévu pour définir le champ d'étiquette dans l'entrée indiquant le registre, et pour définir un champ d'indicateur (114c) dans l'entrée pour indiquer que l'entrée est valide.

3. L'appareil de la revendication 1 ou de la revendication 2, dans lequel l'instruction est une instruction de déplacement immédiat.

4. L'appareil de la revendication 2, le contrôleur, en réponse au décodage par le premier pipeline d'une instruction consommatrice subséquente dans l'ordre du programme à l'instruction et ayant un opérande nommant le registre, étant prévu pour :
rechercher dans la mémoire cache pour trouver l'entrée qui est étiquetée avec le registre ; et
transmettre la valeur au premier pipeline à condition que l'entrée soit trouvée et que le champ indicateur de l'entrée indique que l'entrée est valide.

5. L'appareil de la revendication 1, comprenant en outre :
un moyen de transmission (110), le moyen de transmission étant destiné à transmettre la valeur à partir de l'entrée au premier pipeline en tant qu'opérande pour une deuxième instruction décodée dans le premier pipeline, à condition que l'entrée soit indiquée comme étant valide, la deuxième instruction étant subséquente dans l'ordre du programme à la première instruction et une instruction consommatrice de la valeur.

6. L'appareil de la revendication 5, comprenant en outre un fichier de registre (120), le fichier de registre comprenant le registre, dans lequel le moyen de définition définit l'entrée comme invalide à l'occasion du décodage d'une troisième instruction visant le registre par le premier pipeline, la troisième instruction déterminant son résultat en lisant dans le fichier de registre.

7. L'appareil de la revendication 1, comprenant en outre un fichier de registre (120), le fichier de registre comprenant le registre, dans lequel le moyen de définition définit l'entrée comme invalide à l'occasion du décodage par le premier pipeline d'une deuxième instruction visant le registre, la deuxième instruction déterminant son résultat en lisant dans le fichier de registre.

8. L'appareil de la revendication 1, comprenant en outre :
un deuxième pipeline (102b) ; et
un moyen de transmission (110), le moyen de transmission permettant de transmettre la valeur de l'entrée au deuxième pipeline en tant qu'opérande pour une deuxième instruction décodée dans le deuxième pipeline, la deuxième instruction étant subséquente, dans l'ordre du programme à la première instruction et une instruction consommatrice de la valeur, à condition que l'entrée soit indiquée comme valide.

9. L'appareil de la revendication 8, comprenant en outre un fichier de registre (120), le fichier de registre comprenant le registre, dans lequel le moyen de définition définit l'entrée comme invalide à l'occasion du décodage d'une troisième instruction par le premier pipeline, la troisième instruction visant le registre, la troisième instruction déterminant son résultat en lisant dans le fichier de registre.

10. L'appareil de la revendication 1, comprenant en outre :
un deuxième pipeline (102b) ; et
un moyen de transmission (110), le moyen de transmission permettant de transmettre la valeur au deuxième pipeline en tant qu'opérande pour une deuxième instruction décodée dans le deuxième pipeline avec un retard nul de pipeline, la deuxième instruction étant subséquente dans l'ordre du programme à la première instruction et une instruction consommatrice de la valeur, à condition que la première instruction fasse en sorte que l'entrée soit indiquée comme valide lorsque la première instruction est exécutée.

11. L'appareil de la revendication 1 ou de la revendication 2, dans lequel l'appareil est choisi dans le groupe comprenant un téléphone cellulaire et une station de base.

12. Procédé comprenant les étapes consistant à :
décoder (202) une première instruction dans un premier pipeline, dans lequel la première instruction écrit une valeur dans un registre à la fin de l'exécution, et dans lequel la valeur est déterminée ou disponible lorsque le premier pipeline décode la première instruction sans lire un fichier de registre ;
stocker (206) la valeur dans une entrée d'une mémoire cache lors du décodage de la première instruction ;
étiqueter (206) l'entrée avec le registre, permettant de rechercher dans la mémoire cache sur la base des étiquettes ; et
définir (206) l'entrée comme valide.

13. Procédé selon la revendication 12, dans lequel la première instruction est une instruction de déplacement immédiat.

14. Procédé selon la revendication 12, comprenant en outre les étapes consistant à :
décoder (202) une deuxième instruction dans le premier pipeline, la deuxième instruction étant subséquente dans l'ordre du programme à la première instruction et une instruction consommatrice de la valeur ; et
transmettre (210) la valeur de l'entrée dans la mémoire cache au premier pipeline en tant qu'opérande pour la deuxième instruction, à condition que l'entrée soit indiquée comme étant valide.

15. Un support non transitoire lisible par ordinateur ayant des instructions stockées pour amener un appareil selon la revendication 1 à exécuter un procédé selon l'une quelconque des revendications 12 à 14.
